# EUROPEAN PATENT SPECIFICATION

(11) **EP 2 705 693 B1**
(45) Date of publication and mention of the grant of the patent: **28.12.2016**
(21) Application number: 12730181.0
(22) Date of filing: 11.06.2012
(51) Int. Cl.: H04W 36/08, H04W 76/02, H04W 36/22, H04W 84/12

(54) **COMMUNICATION METHOD AND COMMUNICATION SYSTEM FOR VEHICLE AND ROADSIDE EQUIPMENT**
KOMMUNIKATIONSVERFAHREN UND KOMMUNIKATIONSSYSTEM FÜR EIN FAHRZEUG UND EINE VORRICHTUNG AM STRASSENRAND
PROCÉDÉ DE COMMUNICATION ET SYSTÈME DE COMMUNICATION POUR UN VÉHICULE ET UN ÉQUIPEMENT DE BORD DE ROUTE

(30) Priority: 13.06.2011 CN 201110158049
(43) Date of publication of application: 12.03.2014
(73) Proprietor: Siemens Aktiengesellschaft, 80333 München (DE)
(72) Inventor: LAMPE, Mattias, Beijing 100102 (CN); TIAN, Ji Feng, Beijing 100102 (CN)
(74) Representative: Patentanwaltskanzlei WILHELM & BECK
(86) International application number: PCT/EP2012/060992
(87) International publication number: WO 2012/171870

(56) References cited:
- EP-A1- 1 727 311
- EP-A2- 1 337 055
- EP-A2- 2 413 647
- WO-A1-2007/048443

## Description

### Technical field

The present invention relates to the field of communications, and in particular, to a communication method and a communication system for a vehicle and roadside equipment.

### Background art

With the process of urbanization, more and more people select the public transport system to go out, which means that people will spend more time on vehicles such as the subway system. On the other hand, with the improvement of multimedia technology, multimedia content such as high-definition video and the like are more and more popularized. Therefore, high-capacity multimedia services such as high-definition video in the subway system and the like will be significantly needed. That is to say, high-capacity multimedia broadcasts need to be executed in the Passenger Information System (PIS).

Regarding the fact that Wireless Local Area Network (WLAN) technology has been widely used in the PIS of the subway system, the wireless transmission of multimedia contents with such high capacity is a big challenge, especially when the train is in motion. It needs to be noted that the train will be frequently switched during the travel, which causes the signal to be interrupted and has a negative effect on the throughput. The continuous and high-speed wireless data connection needs to be kept by the expensive roadside infrastructure when the train is travelling, and since proper access points have to be deployed by the side of the entire rail for comprehensive tracking, it brings higher costs for the equipment, the wiring, installation, maintenance and the like.

A solution capable of alleviating the above problem is as follows: a plurality of Access Points (APs) are deployed around the platform of the station rather than being deployed the APs by the side of the entire rail, and a plurality of Clients are deployed at the side of the train and are activated within the time when the train stops by the platform. Compared with keeping a continuous data link between the train and the roadside equipment, in this solution, the data is switched between the train and the roadside equipment within a shorter time interval at a higher rate and stored on the train for the journey. A large amount of multimedia content is transmitted to a memory on the train from a server on the platform via a plurality of data links between the APs and the Clients when the train stops. All the contents are stored on the train and are displayed for passengers to watch at a normal speed offline when the train is travelling. Although this method will cause some program delay, such delay is tolerable since the time interval between every two stations is usually just a few minutes. Certainly, a communication method for the vehicle and the roadside equipment, which have been more preferable than this solution, can be further proposed.

Document EP 1 337 055 A2 shows a method of information provisioning and communication in vehicles. Beneath the communication in a vehicle, it also shows the communication of a server installed in the vehicle with external roadside equipment using an independent access thus allowing the update of information at the server at dedicated stops.

Document EP 1 727 311 A1 also shows a communication system between a vehicle network and a wayside network. Two WLAN clients are installed at each end of the train. Only the client having the best RSSI is transmitting at a given moment. A router in the train maintains a table containing the mapping between the train, the active client, the AP at the wayside and the associated cluster router.

### Content of the Invention

In view of this, a communication method and a communication system are proposed in the embodiments of the present invention, so as to optimize the communication between the vehicle and the roadside equipment.
In particular, the technical solution of the present invention is realized as follows:
A communication method in a communication system, consisting of a roadside equipment provided with a plurality of first communication unit (102), wherein said first communication units are assigned with identical first MAC addresses; and a vehicle (101) provided with a plurality of second communication units (103),
the communication method comprises the steps of
monitoring by said plurality of second communication units beacon signals (202, 301, 302) sent out by said roadside equipment when said vehicle travels to get close to said roadside equipment,
sending out by said second communication units (103), a request to said first MAC address when the intensity of the beacon signal monitored by any of the second communication units (103) is greater than a preset threshold value, so as to establish a communication (203, 303, 304, 305) between said vehicle and said roadside equipment;
characterized in that
the second communication units (103) have been assigned an identical second MAC address for the subsequent data exchange.

The method further comprises: receiving, by said second communication units (103), data with the destination address thereof being said second MAC address.
The sending, by said first communication units (102), data to be transmitted, which have been assigned thereto, to said second MAC address comprises:
sending, by each of the first communication units, the data to be transmitted, which have been assigned thereto, to said second MAC address according to a first transmission rate when said vehicle stops by said roadside equipment; and
sending the data to be transmitted, which have been assigned thereto, to said second MAC address by each of the first communication units according to a second transmission rate when said vehicle moves relative to said roadside equipment,
wherein said second transmission rate is smaller than said first transmission rate.

Said first transmission units are Wireless Local Area Network (WLAN) access points, and said second transmission units are WLAN clients.

A communication system, comprising:
roadside equipment provided with a plurality of first communication units (102), wherein said first communication units are assigned with identical first MAC addresses; and
a vehicle (101) provided with a plurality of second communications units (103), wherein said plurality of second communication units are configured to monitor beacon signals (202, 301, 302) sent out by said roadside equipment when said vehicle travels to get close to said roadside equipment, the second communication units (103) are further configured to send out, when the intensity of the beacon signal monitored by any of the second communication units (103) is greater than a preset threshold value, a request to said first MAC address, so as to establish a communication connection (203, 303, 304, 305) between said vehicle and said roadside equipment;
characterized in that
the second communication units (103) have been assigned an identical second MAC address for the subsequent data exchange.

Said plurality of first communication units are used for sending data to be transmitted, which have been assigned thereto, to the second MAC address (306) after the communication connection between said vehicle and said roadside equipment has been established, wherein identical second MAC addresses are assigned to said plurality of second communication units, with said second MAC address being different from the first MAC addresses.

Said second communication units are further used for receiving data with the destination address thereof being said second MAC address.

Said first communication units are used for:
sending data to be transmitted, which have been assigned thereto, to said second MAC address according to a first transmission rate when said vehicle stops by said roadside equipment; and
sending data to be transmitted, which have been assigned thereto, to said second MAC address according to a second transmission rate when said vehicle moves relative to said roadside equipment,
wherein said second transmission rate is smaller than said first transmission rate.

Said vehicle further comprises a control unit for controlling the ON and/or OFF of a power supply to said second communication units.

Said first transmission units are Wireless Local Area Network (WLAN) access points, and said second transmission units are WLAN clients.

It can be seen from the above that the communication method and the communication system for the vehicle and the roadside equipment provided by the present invention are more preferable, making it easier establish a communication connection between the vehicle and the roadside equipment.
The above solution, technical features, advantages of the present invention and implementations thereof will be further described below in a clear and easily understandable way by the description of the embodiments in conjunction with the accompanying drawings.

### Description of the accompanying drawings

Fig. 1 is a multi-AP multi-client solution provided for the communication between a vehicle and roadside equipment in one embodiment of the present invention;
Fig. 2 is a flowchart showing a communication method for a vehicle and roadside equipment in one embodiment of the present invention;
Fig. 3 is a specific realization diagram showing the communication between a vehicle and roadside equipment in one embodiment of the present invention; and
Figs. 4a to 4d are example diagrams showing a multi-AP multi-client communication process based on client and/or access point binding in one embodiment of the present invention.

In particular, the reference signs used in the above figures are as follows:
A train 101, one or more Access Points (APs) 102, one or more clients 103, one or more antennae 104 deployed at the AP(s) and one or more antennae 105 deployed at the client(s).

### Particular embodiments

In order to make the objects, technical solutions and advantages of the present invention more apparent, the present invention will be further described in detail below with reference to the accompanying drawings and embodiments.

It has been discovered from the actual application that the existing vehicle (such as the train) does not start establishing the wireless link and transmitting the data until it has stopped, and the data transmission time during stopping is relatively short, which is a big challenge to the wireless transmission. The available data transmission time between the vehicle and the roadside equipment is prolonged by accelerating the connection establishment process when the train enters into the station in the embodiments of the present invention, so as to optimize the data exchange between the train and the platform. In particular, a mechanism based on Media Access Control (MAC) address binding is proposed in the embodiments of the present invention so as to shorten the connection establishment time between the multi-AP and the multi-client, and improve the data transmission efficiency by making the best of the inbound time, the stop time and the outbound time of the train, etc.

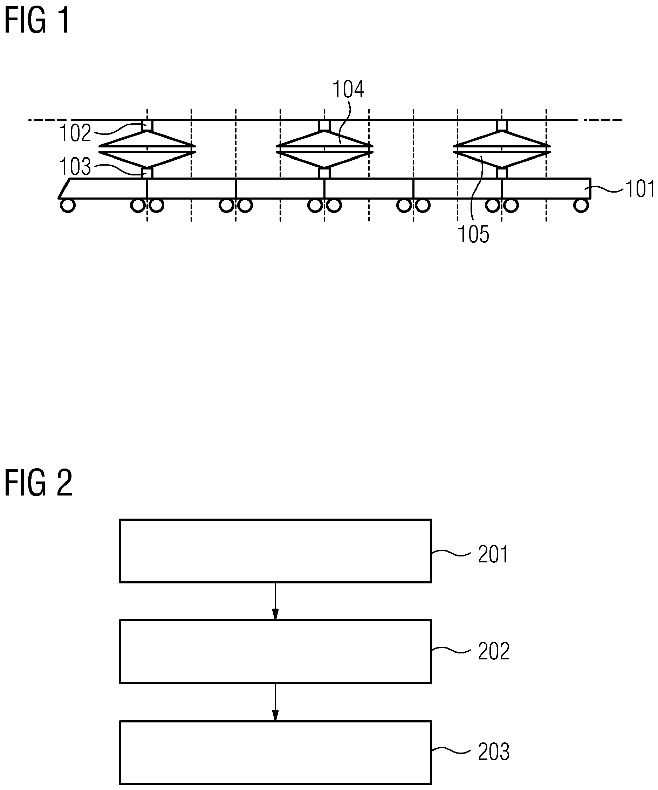

In a particular implementation of the present invention, when the train 101 stops by the platform, the APs 102, the clients 103, and the antennas 104 and 105 thereof are deployed as shown in Fig. 1, wherein the antennas 104 and 105 can be directional antennas. At this moment, the distance between the AP and the corresponding client (forming an AP/client pair) is very short, and the data links of a plurality of AP/client pairs are not mutually interfered. Therefore, all the AP/client pairs can work at the same frequency. In the communication method provided by the embodiments of the present invention, a plurality of APs which involves large capacity transmission are bound onto identical first MAC addresses (which can be expressed as MAC-AP), and a plurality of clients provided onboard the train are bound onto identical second MAC addresses (which can be expressed as MAC-Cli). For example, in order to transmit high-definition videos in the subway system, the access point MAC address binding or the client MAC address binding based on a virtual MAC address is executed in the embodiments of the present invention. Each client only receives signals from one AP within a certain time period. Similarly, each AP only receives signals from one client within a certain time period. Therefore, although a plurality of APs or a plurality of clients share the MAC address, the same client (or AP) cannot receive data packets from different APs (or clients) as this causes data-receiving chaos. Furthermore, a control unit connected with a plurality of clients can be further deployed onboard the train so as to control the clients.

Fig. 2 is a flowchart showing a communication method for a vehicle and roadside equipment in one embodiment of the present invention, comprising:
Step S201: assign identical first Media Access Control (MAC) addresses to a plurality of first communication units arranged in the roadside equipment.
Step S202: trigger a plurality of second communication units arranged on board the vehicle to monitor the beacon signals sent out by the roadside equipment when the vehicle travels to get close to the roadside equipment.
Step S203: send out, when the intensity of the beacon signal monitored by any of the second communication units is greater than a preset threshold value, a request to the first MAC address by that second communication unit so as to establish a communication connection between the vehicle and the roadside equipment.

In a particular implementation of the present invention, the first communication units are Wireless Local Area Network (WLAN) access points, and the second transmission units are WLAN clients.

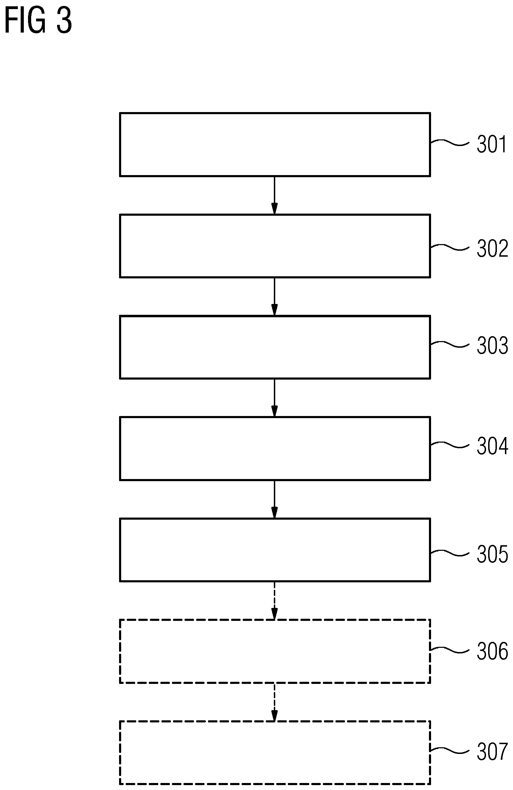

In particular, the communication process of the embodiments of the present invention is shown as Fig.3:
In step 301, the train enters into the platform, and the control unit powers up a plurality of clients. In this step, whether the train enters into the platform or not can be judged according to the prior art, which need not be described here.
In step 302, the charged clients are switched to a specified channel, the beacon signals are monitored, and the signal intensity is reported to the control unit.
In step 303, an associated process is started up when any of the clients receives a beacon signal which is enough high in intensity, for example, for it to be greater than a preset beacon signal intensity threshold value. In particular, an association request signal is sent out by the client which receives the beacon signals from a specified service set identifier (SSID) and sent to the MAC-AP. In a particular implementation of the present invention, whether the intensity of the beacon signal is strong enough or not can be judged by the clients per se, or can be judged and then reported by the control unit to the corresponding client.
In step 304, an association response signal will be returned after a certain AP receives the association request signal.
In step 305, an authentication process is performed, which authentication process is similar to the association process. It needs to be noted that steps 302-305 are the connection establishment process.
In step 306, data transmission is started after the authentication is completed. Compared with the connection establishment process, different APs transmit different data during data transmission.
In step 307, the train departs from the platform, and all the above clients lose the beacon signals. At this moment, the control unit will switch off the power supplies of the clients.

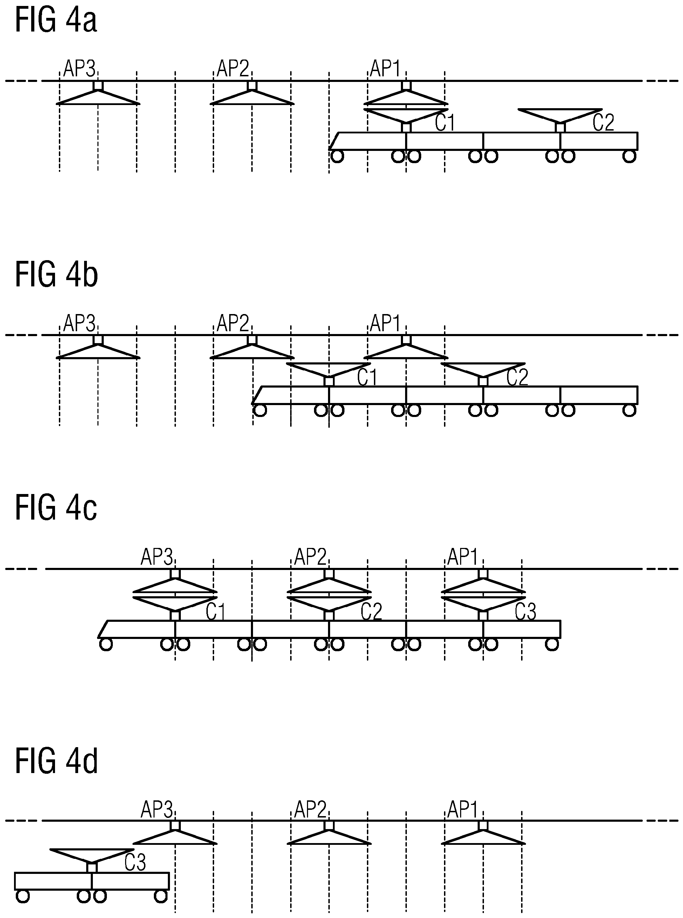

It can be seen that the communication process provided by the embodiments of the present invention can be divided into three stages:
(1) a connection establishment stage: a plurality of APs work by adopting the same MAC addresses (such as the MAC-APs) during the connection establishment process, and a plurality of clients also work by adopting the same MAC-Clis with reference to Fig. 4a.
(2) A data transmission stage when the train stops: different APs transmit different data to the same destination addresses with reference to Fig. 4c. The data is transmitted between the train and the platform at a first transmission rate in this stage. In a particular implementation example, the first transmission rate can be the highest transmission rate allowed between the train and the platform. In a particular implementation, whether the train has stopped by the platform or not can be judged according to the moving speed of the train, for example, the train has stopped by the platform when the moving speed thereof is 0 or is decreased to be a smaller value approximate to 0 after the train enters into the station.
(3) A data transmission stage when the train does not stop: different data is assigned to different APs for transmission, and the destination MAC addresses thereof are the same, i.e. the MAC-Cli. The transmission will be successful if any of the clients is moved to the coverage area of any of the access points. Otherwise, the transmission will be failed and retransmission is needed, and the retransmission mechanism usually used by the WLAN equipment can be adopted herein.

It needs to be noted that the non-stop period comprises a deceleration period before the train stops by the platform (such as the inbound time of the train), such as the period that the train moves to the position shown in Fig. 4c from the position shown in Fig. 4a, and comprises an acceleration period when the train starts up to depart from the platform (such as the outbound time of the train), such as the period that the train moves to the position shown in Fig. 4d from the position shown in Fig. 4c. During the non-stop period, the signal is not stable enough, and the highest transmission speed may not be ensured, therefore, the data can be transmitted between the train and the platform at a second transmission rate smaller than the highest transmission rate. Generally, the second transmission rate is smaller than the first transmission rate.

Furthermore, a particular implementation example of the present invention is shown in the Figs. 4a to 4d.
1) All clients are powered up to start to monitor the beacon when the train enters into the platform. When the intensity of the beacon signal received by the client 1 (expressed as the C1) is high enough, it shows that the C1 has entered into the coverage area of the AP1, and the connection establishment process is started as shown in Fig. 4a. In normal circumstances, the AP1 is the first access point which can be monitored after the train enters into the station, the C1 is the first client arranged onboard the train along the travelling direction thereof, and the C1 and the AP1 represent all the clients and all the access points to complete the connection establishment process, including association and authentication. In Fig. 4a, the C1 and the AP1 have been directly opposite to each other, and the distance between the C1 and the AP1 is minimal. In the practical application, the intensity threshold value of the beacon signals can be set as required, so that the connection establishment process is started before the train arrives at the position shown in Fig. 4a.
2) Data transmission is started after the connection has been established. The data needs to be assigned to different access points by adopting a certain data assignment mechanism, for example, the assignment can be executed with reference to the prior art. In this case, a self-adaptive assignment solution is a usable mechanism, for example, less data will be assigned to the APs which execute more retransmissions. Therefore, as shown in Fig. 4b, when the train moves, the AP3 nearly obtains no data due to more retransmissions, and the AP1 and the AP2 are assigned with more data relatively. When the train moves, for example, the C1 is taken as the receiving part, and it always receives the data from the MAC-AP. In particular, the C1 receives data from the AP1 when the C1 is under the coverage range of the AP1; and the C1 receives data from the AP2 when the C1 is under the coverage range of the AP2. For example, the AP1 is taken as the sending part, and it always sends data to the MAC-Cli. In particular, the data of the AP1 is sent to the C1 when the C1 is under the coverage range of the AP1, and the data of the AP1 is sent to the C2 when the C2 is under the coverage range of the AP1.
3) All the APs and clients are directly opposite to one another as shown in Fig. 4c when the train stops, for example, the AP3 is directly opposite to the C1, the AP2 is directly opposite to the C2, and the AP1 is directly opposite to the C3. The transmission rate of each data link can be maximal under such circumstances. For example, the data is sent to the C1 from the AP3 by the data link between the AP3 and the C1 at the highest transmission rate.
4) The train starts up to depart from the platform, and gradually moves to the position shown in Fig. 4d from the position shown in Fig. 4c. The data transmission at this stage is similar to that shown in Fig. 4b, which need not be described here.
5) The last connection link between the train and the roadside equipment has been disconnected when the train arrives at the position shown in Fig. 4d. For example, the C3 sends out a deassociation signal according to the intensity of the monitored beacon signals. Alternatively, the APs and the clients are de-associated in case of being overtime. At this moment, all the clients lose the beacon signals, and the control unit switches off the power supplies of all clients.

It is pointed that the method provided by the embodiments of the present invention has at least one of the following advantages:
1. The communication method based on virtual MAC addresses binding provided by the embodiments of the present invention simplifies a connection establishment and/or data transmission process between multi-access point and multi-client.
2. The communication method provided by the embodiments of the present invention can not only establish a connection but can also transmit data when the train moves in the platform (including inbound and outbound). In particular, due to the virtual MAC address binding operation adopted by the embodiments of the present invention, the complexity for signaling interaction between multi-AP and multi-client is reduced, and frequent switching operation can also be avoided.
3. For the communication between the vehicle and the roadside equipment performed between the subway train and the infrastructure deployed at the station and close to the rail, the method provided by the embodiments of the present invention can ensure necessary spatial isolation among a plurality of AP/client pairs, so that the interference among the physical links is limited. For example, spatial isolation can be better ensured by adjusting the length of the train, adopting lower transmission power and directional antennae and the like, and/or rationally deploying the access points/clients along the length direction of the train, etc.

It should be pointed out that the communication method provided by the embodiments of the present invention is suitable for any vehicle such as subway trains, trains, airport ferry push cars, buses and the like, which will not be listed one by one herein. Furthermore, the roadside equipment provided by the embodiments of the present invention comprises a stop arranged onboard the vehicle, such as a plurality of communication units of the train platform, the bus station and the like, and also comprises a server computer stored with large-capacity multimedia contents.

Furthermore, the embodiments of the present invention further provide a communication system, comprising:
roadside equipment provided with a plurality of first communication units, wherein identical first Media Access Control (MAC) addresses are assigned to said plurality of first communication units; and a vehicle provided with a plurality of second communication units, wherein said plurality of second communication units are used for monitoring the beacon signals sent out by said roadside equipment when said vehicle travels to get close to said roadside equipment, and sending out, when the intensity of any of the beacon signals is greater than an intensity threshold value of the beacon signal, a request to the first MAC address by that second communication unit which monitors the beacon signal so as to establish a communication connection between said vehicle and said roadside equipment. In an exemplary implementation of the present invention, said first transmission units are Wireless Local Area Network (WLAN) access points, and said second transmission units are WLAN clients.

In particular, said plurality of first communication units are used for sending data to be transmitted, which have been assigned thereto, to a second MAC address after the communication connection between said vehicle and said roadside equipment has been established, wherein identical second MAC addresses are assigned to said plurality of second communication units, with said second MAC address being different from said first MAC address.

In particular, said second communication units are further used for receiving data with the destination address thereof being said second MAC address.

Furthermore, said first communication units are used for:
sending data to be transmitted, which have been assigned thereto, to said second MAC address according to a first transmission rate when said vehicle stops by said roadside equipment; and sending the data to be transmitted, which have been assigned thereto, to said second MAC address according to a second transmission rate when said vehicle moves relative to said roadside equipment, wherein said second transmission rate is smaller than said first transmission rate.

In an exemplary implementation of the present invention, said vehicle further comprises a control unit for controlling the ON and/or OFF of the power supplies to said second communication units.

The particular operations of the first communication units, second communication unit, the control unit and the like in the above communication system can be made with reference to the description of Figs. 1-3 and the method process, which need not be described here.

Disclosed in the present invention is a communication method and a communication system for a vehicle and roadside equipment. In particular, the method comprises: assigning identical first Media Access Control (MAC) addresses to a plurality of first communication units arranged in said roadside equipment; triggering a plurality of second communication units arranged onboard said vehicle to monitor the beacon signals sent out by said first communication units when said vehicle travels to get close to said roadside equipment; and sending out, when the intensity of the beacon signal monitored by any of the second communication units is greater than a preset threshold value, a request to the first MAC addresses by that second communication unit so as to establish a communication connection between said vehicle and said roadside equipment.

The present invention has been illustrated and described above in detail by way of the drawings and embodiments, however, the present invention is not limited to these disclosed embodiments, and other solutions derived therefrom by those skilled in the art are within the scope of protection of the present invention.

## Claims

1. A communication method in a communication system, consisting of a roadside equipment provided with a plurality of first communication unit (102), wherein said first communication units are assigned with identical first MAC addresses; and a vehicle (101) provided with a plurality of second communication units (103),
the communication method comprises the steps of
monitoring by said plurality of second communication units beacon signals (202, 301, 302) sent out by said roadside equipment when said vehicle travels to get close to said roadside equipment,
sending out by said second communication units (103), a request to said first MAC address when the intensity of the beacon signal monitored by any of the second communication units (103) is greater than a preset threshold value, so as to establish a communication (203, 303, 304, 305) between said vehicle and said roadside equipment;
**characterized in that**
the second communication units (103) have been assigned an identical second MAC address for the subsequent data exchange.

2. The method as claimed in claim 1, **characterized in that** it further comprises: receiving, by said second communication units (103), data with the destination address thereof being said second MAC address.

3. The method as claimed in claim 1, **characterized in that** the sending, by said first communication units, data to be transmitted, which have been assigned thereto, to said second MAC address comprises:
sending, by each of the first communication units, the data to be transmitted, which have been assigned thereto, to said second MAC address as claimed in a first transmission rate when said vehicle stops by said roadside equipment; and
sending, by each of the first communication units, the data to be transmitted, which have been assigned thereto, to said second MAC address as claimed in a second transmission rate when said vehicle is moving relative to said roadside equipment,
wherein said second transmission rate is smaller than said first transmission rate.

4. The method as claimed in any one of claims 1 - 3 , **characterized in that** it further comprises: receiving, by said plurality of second communication units (103), the data with the destination address thereof being said second MAC address after said communication connection has been established,
wherein said second MAC address is different from said first MAC address, and said second MAC address is shared by said plurality of second communication units (103).

5. The method as claimed in any one of claims 1-4, **characterized in that** said first transmission units are wireless local area network (WLAN) access points, and said second transmission units are WLAN clients.

6. A communication system, comprising:
roadside equipment provided with a plurality of first communication units (102), wherein said first communication units are assigned with identical first MAC addresses; and
a vehicle (101) provided with a plurality of second communications units (103), wherein said plurality of second communication units are configured to monitor beacon signals (202, 301, 302) sent out by said roadside equipment when said vehicle travels to get close to said roadside equipment, the second communication units (103) are further configured to send out, when the intensity of the beacon signal monitored by any of the second communication units (103) is greater than a preset threshold value, a request to said first MAC address, so as to establish a communication connection (203, 303, 304, 305) between said vehicle and said roadside equipment;
**characterized in that**
the second communication units (103) have been assigned an identical second MAC address for the subsequent data exchange.

7. The system as claimed in claim 6, **characterized in that** said plurality of first communication units are used for sending data to be transmitted, which have been assigned thereto, to the second MAC address (306) after the communication connection between said vehicle and said roadside equipment has been established, wherein said plurality of second communication units are assigned with identical second MAC addresses, with said second MAC address being different from said first MAC address.

8. The system as claimed in claim 7, **characterized in that** said second communication units are further used for receiving data with the destination address thereof being said second MAC address.

9. The system as claimed in claim 7, **characterized in that** said first communication units are used for:
sending data to be transmitted, which have been assigned thereto, to said second MAC address as claimed in a first transmission rate when said vehicle stops by said roadside equipment; and
sending the data to be transmitted, which have been assigned thereto, to said second MAC address as claimed in a second transmission rate when said vehicle is moving relative to said roadside equipment,
wherein said second transmission rate is smaller than said first transmission rate.

10. The system as claimed in claim 6, **characterized in that** said vehicle further comprises a control unit for controlling the ON and/or OFF of a power supply to said plurality of second communication units.

11. The system as claimed in any of claims 6-10, **characterized in that** said first transmission units are wireless local area network (WLAN) access points, and said second transmission units are WLAN clients.

## Patentansprüche

1. Kommunikationsverfahren in einem Kommunikationssystem, bestehend aus einer Ausrüstung am Straßenrand, die mit einer Vielzahl erster Kommunikationseinheiten (102) versehen ist, wobei den ersten Kommunikationseinheiten identische erste MAC-Adressen zugewiesen sind; und einem Fahrzeug (101), das mit einer Vielzahl zweiter Kommunikationseinheiten (103) versehen ist,
wobei das Kommunikationsverfahren die folgenden Schritte umfasst
Überwachen, durch die Vielzahl zweiter Kommunikationseinheiten, von Bakensignalen (202, 301, 302), ausgesandt von der Ausrüstung am Straßenrand, wenn das Fahrzeug fährt, um der Ausrüstung am Straßenrand nahe zu kommen,
Aussenden, durch die zweiten Kommunikationseinheiten (103), einer Anforderung an die erste MAC-Adresse, wenn die Intensität des von einer beliebigen der zweiten Kommunikationseinheiten (103) überwachten Bakensignals größer ist als ein voreingestellter Schwellenwert, um eine Kommunikation (203, 303, 304, 305) zwischen dem Fahrzeug und der Ausrüstung am Straßenrand herzustellen;
**dadurch gekennzeichnet, dass**
den zweiten Kommunikationseinheiten (103) eine identische zweite MAC-Adresse für den anschließenden Datenaustausch zugewiesen ist.

2. Verfahren nach Anspruch 1, **dadurch gekennzeichnet, dass** es ferner umfasst: Empfangen, durch die zweiten Kommunikationseinheiten (103), von Daten, deren Zieladresse die zweite MAC-Adresse ist.

3. Verfahren nach Anspruch 1, **dadurch gekennzeichnet, dass** das Senden, durch die ersten Kommunikationseinheiten, von zu übertragenen Daten, die diesen zugewiesen sind, an die zweite MAC-Adresse umfasst:
Senden, durch jede der ersten Kommunikationseinheiten, der zu übertragenen Daten, die diesen zugewiesen sind, an die zweite MAC-Adresse, wie beansprucht, mit einer ersten Übertragungsrate, wenn das Fahrzeug bei der Ausrüstung am Straßenrand anhält; und
Senden, durch jede der ersten Kommunikationseinheiten, der zu übertragenen Daten, die diesen zugewiesen sind, an die zweite MAC-Adresse, wie beansprucht, mit einer zweiten Übertragungsrate, wenn das Fahrzeug sich relativ zu der Ausrüstung am Straßenrand bewegt,
wobei die zweite Übertragungsrate kleiner ist als die erste Übertragungsrate.

4. Verfahren nach einem der Ansprüche 1-3, **dadurch gekennzeichnet, dass** es ferner umfasst: Empfangen, durch die Vielzahl zweiter Kommunikationseinheiten (103), der Daten, deren Zieladresse die zweite MAC-Adresse ist, nachdem die Kommunikationsverbindung hergestellt wurde,
wobei die zweite MAC-Adresse von der ersten MAC-Adresse verschieden ist und die zweite MAC-Adresse von der Vielzahl zweiter Kommunikationseinheiten (103) gemeinsam genutzt wird.

5. Verfahren nach einem der Ansprüche 1-4, **dadurch gekennzeichnet, dass** die ersten Übertragungseinheiten Zugangspunkte eines drahtlosen lokalen Netzwerks (WLAN)
sind und die zweiten Übertragungseinheiten WLAN-Clients sind.

6. Kommunikationssystem, umfassend:
Ausrüstung am Straßenrand, die mit einer Vielzahl erster Kommunikationseinheiten (102) versehen ist, wobei den ersten Kommunikationseinheiten identische erste MAC-Adressen zugewiesen sind; und
ein Fahrzeug (101), das mit einer Vielzahl zweiter Kommunikationseinheiten (103) versehen ist, wobei die Vielzahl zweiter Kommunikationseinheiten konfiguriert ist, Bakensignale (202, 301, 302), ausgesandt von der Ausrüstung am Straßenrand, wenn das Fahrzeug fährt, um der Ausrüstung am Straßenrand nahe zu kommen, zu überwachen, wobei die zweiten Kommunikationseinheiten (103) ferner konfiguriert sind, wenn die Intensität des Bakensignals, das von einem beliebigen der zweiten Kommunikationseinheiten (103) überwacht wird, größer ist als ein voreingestellter Schwellenwert, eine Anforderung an die erste MAC-Adresse auszusenden, um eine Kommunikationsverbindung (203, 303, 304, 305) zwischen dem Fahrzeug und der Ausrüstung am Straßenrand herzustellen;
**dadurch gekennzeichnet, dass**
den zweiten Kommunikationseinheiten (103) eine identische zweite MAC-Adresse für den anschließenden Datenaustausch zugewiesen ist.

7. System nach Anspruch 6, **dadurch gekennzeichnet, dass** die Vielzahl erster Kommunikationseinheiten zum Senden von zu übertragenen Daten, die diesen zugewiesen sind, an die zweite MAC-Adresse (306) verwendet wird, nachdem die Kommunikationsverbindung zwischen dem Fahrzeug und der Ausrüstung am Straßenrand hergestellt wurde, wobei der Vielzahl zweiter Kommunikationseinheiten identische zweite MAC-Adressen zugewiesen sind, wobei die zweite MAC-Adresse von der ersten MAC-Adresse verschieden ist.

8. System nach Anspruch 7, **dadurch gekennzeichnet, dass** die zweiten Kommunikationseinheiten ferner zum Empfangen von Daten, deren Zieladresse die zweite MAC-Adresse ist, verwendet werden.

9. System nach Anspruch 7, **dadurch gekennzeichnet, dass** die ersten Kommunikationseinheiten für Folgendes verwendet werden:
Senden von zu übertragenen Daten, die diesen zugewiesen sind, an die zweite MAC-Adresse, wie beansprucht, mit einer ersten Übertragungsrate, wenn das Fahrzeug bei der Ausrüstung am Straßenrand anhält; und
Senden der zu übertragenen Daten, die diesen zugewiesen sind, an die zweite MAC-Adresse, wie beansprucht, mit einer zweiten Übertragungsrate, wenn das Fahrzeug sich relativ zu der Ausrüstung am Straßenrand bewegt,
wobei die zweite Übertragungsrate kleiner ist als die erste Übertragungsrate.

10. System nach Anspruch 6, **dadurch gekennzeichnet, dass** das Fahrzeug ferner eine Steuereinheit zum Steuern von Ein und/oder Aus einer Leistungsversorgung zu der Vielzahl zweiter Kommunikationseinheiten umfasst.

11. System nach einem der Ansprüche 6-10, **dadurch gekennzeichnet, dass** die ersten Übertragungseinheiten Zugangspunkte eines drahtlosen lokalen Netzwerks (WLAN) sind und die zweiten Übertragungseinheiten WLAN-Clients sind.

## Revendications

1. Procédé de communication dans un système de communication, consistant en un équipement de bord de route muni d'une pluralité de premières unités de communication (102), lesdites premières unités de communication s'étant vues assigner des premières adresses de commande MAC identiques ; et en un véhicule (101) muni d'une pluralité de secondes unités de communication (103),
le procédé de communication comprend les étapes suivantes :
la surveillance, par ladite pluralité de secondes unités de communication, de signaux de balisage (202, 301, 302) envoyés par ledit équipement de bord de route lorsque ledit véhicule se déplace pour se rapprocher dudit équipement de bord de route,
l'envoi, par lesdites secondes unités de communication (103), d'une demande vers ladite première adresse de commande MAC lorsque l'intensité du signal de balisage surveillé par l'une quelconque des secondes unités de communication (103) est supérieure à une valeur de seuil préréglée de sorte à établir une communication (203, 303, 304, 305) entre ledit véhicule et ledit équipement de bord de route,
**caractérisé en ce que**
les secondes unités de communication (103) se sont vues assigner une seconde adresse de commande MAC identique pour l'échange de données qui suit.

2. Procédé selon la revendication 1, **caractérisé en ce qu'**il comprend en outre : la réception, par lesdites secondes unités de communication (103), de données dont l'adresse de destination est ladite seconde adresse de commande MAC.

3. Procédé selon la revendication 1, **caractérisé en ce que** l'envoi vers ladite seconde adresse de commande MAC, par lesdites premières unités de communication, de données à transmettre qui leur ont été assignées, comprend :
l'envoi, par chacune des premières unités de communication, des données à transmettre qui leur ont été assignées, vers ladite seconde adresse de commande MAC, tel que revendiqué dans une première vitesse de transmission, lorsque le ledit véhicule stoppe auprès dudit équipement de bord de route, et
l'envoi, par chacune des premières unités de communication, des données à transmettre, qui leur ont été assignées, vers ladite seconde adresse de commande MAC, tel que revendiqué dans une seconde vitesse de transmission, lorsque le ledit véhicule se déplace par rapport au dit équipement de bord de route,
dans lequel ladite seconde vitesse de transmission est plus petite que ladite première vitesse de transmission.

4. Procédé selon l'une quelconque des revendications 1 à 3, **caractérisé en ce qu'**il comprend en outre : la réception, par ladite pluralité de secondes unités de communication (103), des données dont l'adresse de destination est ladite seconde adresse de commande MAC après l'établissement de ladite liaison de communication,
dans lequel ladite seconde adresse de commande MAC est différente de ladite première adresse de commande MAC, et où ladite seconde adresse de commande MAC est partagée par ladite pluralité de secondes unités de communication (103).

5. Procédé selon l'une quelconque des revendications 1 à 4, **caractérisé en ce que** lesdites premières unités de transmission sont des points d'accès de réseau local sans fil (WLAN), et **en ce que** lesdites secondes unités de transmission sont des clients de réseau WLAN.

6. Système de communication comprenant :
un équipement de bord de route muni d'une pluralité de premières unités de communication (102), lesdites premières unités de communication s'étant vues assigner des premières adresses de commande MAC identiques ; et
un véhicule (101) muni d'une pluralité de secondes unités de communication (103), ladite pluralité de secondes unités de communication étant configurée pour surveiller des signaux de balisage (202, 301, 302) envoyés par ledit équipement de bord de route lorsque ledit véhicule se déplace pour se rapprocher dudit équipement de bord de route, les secondes unités de communication (103) étant en outre configurées pour envoyer une demande vers ladite première adresse de commande MAC lorsque l'intensité du signal de balisage surveillé par l'une quelconque des secondes unités de communication (103) est supérieure à une valeur de seuil préréglée, de sorte à établir une communication (203, 303, 304, 305) entre ledit véhicule et ledit équipement de bord de route,
**caractérisé en ce que**
les secondes unités de communication (103) se sont vues assigner une seconde adresse de commande MAC identique pour l'échange suivant de données.

7. Système selon la revendication 6, **caractérisé en ce que** ladite pluralité de premières unités de communication est utilisée pour envoyer des données à transmettre, qui leur ont été assignées, à la seconde adresse de commande MAC (306) après l'établissement de la liaison de communication entre ledit véhicule et ledit équipement de bord de route, ladite pluralité de secondes unités de communication se voyant assigner des secondes adresses de commande MAC identiques, lesdites secondes adresses de commande MAC étant différentes desdites premières adresses de commande MAC.

8. Système selon la revendication 7, **caractérisé en ce que** lesdites secondes unités de commutation sont en outre utilisées pour recevoir des données, leur adresse de destination étant ladite seconde adresse de commande MAC.

9. Système selon la revendication 7, **caractérisé en ce que** lesdites premières unités de communication sont utilisées pour :
envoyer des données à transmettre, qui leur ont été assignées, vers ladite seconde adresse de commande MAC tel que revendiqué dans une première vitesse de transmission lorsque ledit véhicule s'arrête auprès dudit équipement de bord de route, et
envoyer des données à transmettre, qui leur ont été assignées, vers ladite seconde adresse de commande MAC tel que revendiqué dans une seconde vitesse de transmission lorsque ledit véhicule se déplace par rapport au dit équipement de bord de route,
dans lequel ladite seconde vitesse de transmission est plus petite que ladite première vitesse de transmission.

10. Système selon la revendication 6, **caractérisé en ce que** ledit véhicule comprend en outre une unité de commande destinée à commander la mise en et hors circuit d'une alimentation sur ladite pluralité de secondes unités de communication.

11. Système selon l'une quelconque des revendications 6 à 10, **caractérisé en ce que** lesdites premières unités de transmission sont des points d'accès de réseau local sans fil (WLAN), et **en ce que** lesdites secondes unités de transmission sont des clients de réseau WLAN.
